# EUROPEAN PATENT APPLICATION

(11) **EP 1 882 517 A1**
(43) Date of publication of application: **30.01.2008**
(21) Application number: 05790183.7
(22) Date of filing: 16.08.2005
(51) Int. Cl.: B01J 3/06, B30B 15/00

(54) **MULTI-ANVIL CUBIC MACHINE COMPRISING HEMISPHERICAL PISTONS, WHICH IS USED TO GENERATE HIGH PRESSURES AND HIGH TEMPERATURES**

(30) Priority: 21.02.2005 ES 200500387
(71) Applicant: Instituto De Monocristales, S.L., 41410 Carmona (ES)
(72) Inventor: MARTIN PARRONDO, Ramon, E-41410 Carmona (ES); BAGRIANTSEV, Dmitri, E-41410 Carmona (ES)
(74) Representative: Tari Lazaro, Aida
(86) International application number: PCT/ES2005/000463
(87) International publication number: WO 2006/082258

(57) **Abstract**

The present invention provides a multi-anvil machine, more specifically, a multi-anvil cubic machine that generates substantially hydrostatic pressures and high temperatures inside an industrial reaction chamber. In said chamber materials such as diamonds, cubic boron nitride and similar materials These conditions are attained in a stable and efficient manner. The generation of force is produced by hemispherical pistons having a short travel path and housed in semi-spherical chambers. The number of mobile components has been reduced in order to simplify and facilitate the assembly during each working cycle.

## Description

### OBJECT OF THE INVENTION

The object of the invention is to provide a high pressure and high temperature machine housed in an industrial reaction chamber which purpose is to obtain diamond, boron nitride and similar substances, by means of cubic multi-a action and the action of semi-spherical pistons provided with modular locks.

### BACKGROUND OF THE INVENTION

devices and machines used to generate high pressures and high temperatures have been developed to cover industrial and research needs. Industrial production of diamonds requires the generation of pressures and temperatures similar to those of the innermost depths of earth where natural crystals are formed. Also, the study and simulation of geologic and mining conditions require said conditions.

In this sense, multiple variations of devices capable of generating large pressures at high temperatures and to maintain those conditions during many hours, even days, have been developed. Within this group of devices are those known as Belt type and the Mold or Matrix types. In these devices the reaction chamber is confined by a perforated metal disc formed by several cylindrical metal layers adjusted to each other, or in some type of contention mold or matrix designed to sustain the tensions generated. The force is generated by two axially opposed pistons that move toward each other pressing the sample, chamber or capsule, or reaction chamber confined into the mold. Said devices are well known and have been described in the ordinary bibliography on high pressures and crystal synthesis and in various patents. These devices are capable of attaining pressures in the 10 Gpa order of magnitude and above, as well as temperatures of 2000°C or above.

To overcome certain problems related to the enormous internal friction that is generated inside the mold and opposed piston types of machines, and to develop pressures closer to hydrostatic pressure, the apparatuses known as multi-anvil machines have been developed. In these machines, several pistons (or co-anvils) press the sample (capsule or reaction chamber) simultaneously. Generally, there are four pistons arranged in a tetrahedral geometry (tetrahedral machine), six pistons arranged in a cubic geometry (cubic machine) and other simple and ingenious arrangements in one or several layers. The same pistons together with their high pressure joints serve to contain the sample. A good review of these types of machines and their operation can be found, as well as their diverse applications.

These types of machines have very good qualities applicable to the synthesis of high pressure and temperature materials; however, they also have some disadvantages that can be improved. The main inconvenience of the multi-anvil machines is their complexity of operation.

Most of these machines require the complex assembly of different bodies and joints before beginning the work cycle, or otherwise require a careful adjustment of the linear alignment of their multiple pistons and the adjustment of the force exerted by each piston. Another serious inconvenience is their low productivity, which is generally due to their inability to work with reaction capsules larger than a few cubic centimeters.

There is then a need to adapt these types of machines to a productive process that allows a profitable operation in industrial environments and in advance applications of Research and Development, increasing their reliability, and productivity, and making the manufacturing process easier.

### DESCRIPTION OF THE INVENTION

The present invention refers to a multi-anvil machine having the possibility of increasing the pressure inside the reaction chamber by means of one or two hemispherical pistons housed in hemispherical chambers that resolve the problems found in the current state of the art. Said machine is capable of generating large pressures and temperatures, inside a reaction chamber, needed in industrial applications for processes such as the manufacture of diamonds, boron nitride and similar substances. In addition, said conditions are generated in a reproducible manner that is also stable in time.

Another objective of the present invention is to provide an easy manufacturable lock capable of containing the force generated by the machine, reducing the size of the assembly parts. Also, said lock is of a modular design, which allows for enlargement of the lock's size, if the size of the reaction chamber or the necessary pressures so require.

Another objective is to provide a multi-anvil machine that can be easily and efficiently operated. The characteristic elements of the invention are:
- **Hemispherical pistons:** the spherical piston is housed in a spherical chamber that has greater resistance to deformation and fracturing that a cylindrical chamber of the same diameter. This feature translates into two advantages: first, the geometry allows for a design of greater resistance to hydraulic pressure, and generates a greater thrust force with a expenditure of material similar to that of a cylindrical piston. Second, at the same thrust force as that produced by a cylindrical piston the wall of the housing element can be reduced.
   The short piston's travel path attains great forces to generate high pressures at a minimum hazard, since the volume of hydraulic fluid stored for its operation is very small. Said volume stores a large quantity of energy that is not dangerous even if the housing element was to break. In the event of breakage, the pressure of the hydraulic liquid decreases quickly at the slightest fissure, dissipating all danger before any liquid exits the housing bod.
- **Modular lock:** the main characteristic of the modular lock is that, because it is configured with the inclusion of the intermediate rings, it facilitates the utilization of reaction chambers of different heights, this characteristic having the advantage that the manufacturing costs are lower than they would be for a whole piece. An additional advantage is that it is possible to regulate the height of the chamber simply by introducing the intermediate pieces and extend the catch ties. This height regulation feature allows designing machines with larger reaction chambers.
- **Anvils or cylindrical sectors:** are of a special design that allows housing other anvils, that once assembled, form a regular octahedron that pushes the reaction chamber from three mutually perpendicular directions (cubic).
   The number of mobile components has been reduced to facilitate and simplify the assembly process during the operation of each work cycle.

### BRIEF DESCRIPTION OF THE FIGURES

**Figure 1:** Cross section of a one piston machine
**Figure 1a:** Detail A of the piston
**Figure 2:** Cross section of a two piston machine
**Figure 3:** Cross section of the machine through the edges of the octahedron
**Figure 4:** Lock section
**Figure 5:** Lock section including an intermediate semi-ring
**Figure 6:** Lock section including two supplementary semi-rings

### PREFERRED EMBODIMENT OF THE INVENTION

The machine object of the present invention has the following elements according to the accompanying figures:
- 1.: Nut
- 2.: Tie
- 3.: Upper semi-ring
- 4.: Lower semi-ring
- 5.: Upper cover
- 6.: Chamber
- 7.: Isolated nut
- 8.: Electrode
- 9.: Seal joint
- 10.: Guide
- 11.: Seal joint
- 12.: Abutment
- 13.: Abutment
- 14.: Seal joint
- 15,: High pressure connection
- 16.: Cooling valve
- 17.: Hemispherical pistons
- 18.: insulating joint plate
- 19.: Cylindrical sector
- 20.: Ring
- 21.: (not in text)
- 22.: Anvil
- 23.: High pressure seal joint
- 24.: Reaction capsule
- 25.: Electrode
- 26.: Intermediate semi-ring
- 27.: Intermediate semi-ring

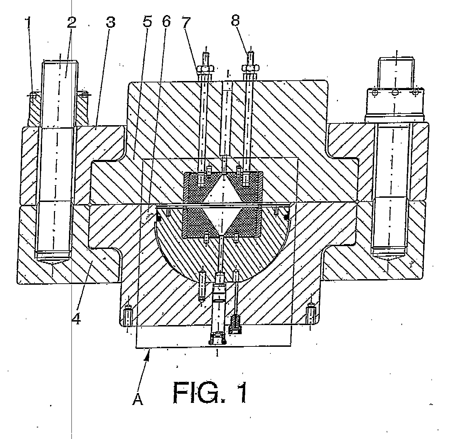

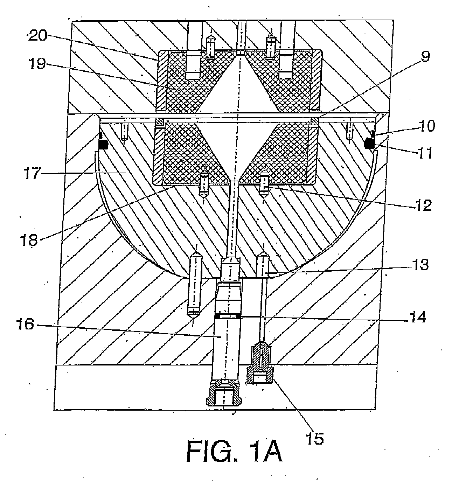

Figure 1 depicts the machine as having two bodies of, basically, cylindrical geometry, one is an upper body called upper cover 5 and the other is a lower body called chamber 6 that houses a semi-spherical cavity where a semi-spherical piston 17 is adjusted.

The design of this spherically shaped chamber supports optimally the hydraulic pressures that can be generated inside it, allowing working conditions in the order of 4,000 and even 6,000 Kgf/sqcm depending on the materials chosen for the design. These two bodies are confined by two semi-locks, that are themselves composed by two upper 3 and lower 4 semi-rings.

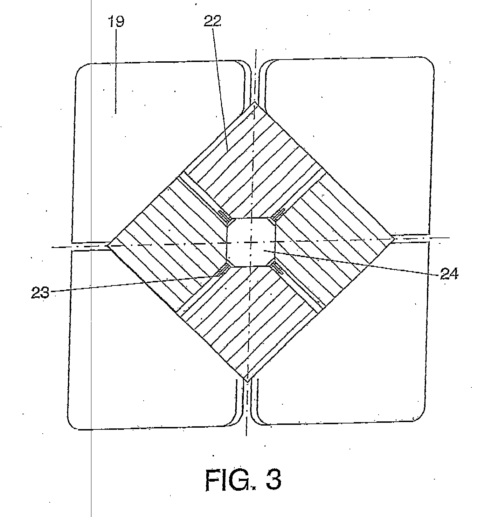

Said semi-rings are joined by ties 2 threaded in the lower semi-ring and tightened by nuts 1. In this manner, the semi-locks form a compact but modular unit set that can sustain the force generated by piston 17, which also thrusts over the upper cover 5 through the set of anvils and capsule as shown in Figure 3.

Figure 1a shows a detail of the semi-spherical piston area, where the necessary hydraulic pressures are generated for the operation of the machine as follows:

High pressure oil enters the semi-spherical high pressure chamber, where the semi-spherical piston 17 is housed, through the high pressure connection 15. Said piston moves axially guided by the abutments 13 and a small guide 10 that travels through a cylindrical surface that has a short length compared to its diameter. This travel movement represents the travel path of the semi-spherical piston, that is then, small in relation to its diameter. This short travel path ensures the machine is working in a highly safe manner, since the possible accumulation of energy that could become dangerous in case any of the elements subjected to high pressure were to break, is then reduced to a thin spherical sheet around the piston. This possible failure or breakage of the material would not have severe consequences, since the layer subjected to high pressure is very thin in relation to the piston's diameter. In case of some type of failure, the volume of the cavity that holds the hydraulic fluid increases quickly, suddenly lowering the pressure to a point of no danger. In other words, it is impossible, in this type of machines for the hydraulic chamber to explode, or for any accident that entails a violent projection of any of the parts that make up the machine to occur.

Below the guide 10 there is a high pressure seal joint 11 that confines the hydraulic fluid together with the high pressure joint 14, preventing escapes. Inside the hemispherical piston there is a cylindrical cavity that houses a series of anvils, called cylindrical sectors 19. Figure 3 shows a detail of the assembly of the cylindrical sectors 19, centered by the abutments 12. Also, they are radially supported over rings 20, both on the semi-spherical piston and on the upper over. These cylindrical sectors are electrically insulated by insulating joint plate 18, both radially and axially. The piston exerts a thrust force over the cylindrical sectors 19, where said cylindrical sectors are designed in such a manner that they themselves house other anvils 22 in a geometrical arrangement such that once assembled they form a regular octahedron.

The thrust of the piston over the cylindrical sectors 19 is itself transmitted to these anvils 22 that are separated by high pressure seal joints 23 that confine the reaction chamber 24.

### The thrust chain is then the following:

The high pressure oil pushes piston 17 that then pushes the cylindrical sectors 19, that then push anvils 22, that in turn push the reaction chamber 24 from three mutually perpendicular directions (cubic), enabling an intensification of the pressure inside the reaction chamber 24 due to the geometric relationship of the forces and components that decompose according to the system's geometry. It is then possible to obtain in reaction chambers of more than 30 cc pressures well above 4 GPa. It is possible, even to obtain pressures above 10 GPa depending on the material used to manufacture the anvils 22 and the contents and size of the reaction chamber.

When heating the reaction chamber becomes necessary, the heating is achieved by an electrical resistance that conducts the electric current through the electrodes 7 and 8 that are in contact with the upper cylindrical sectors that transmit the electrical current to the reaction chamber through anvils 22, all their faces duly insulated, except for the face in contact with the reaction chamber and the corresponding cylindrical sectors.

The entire system is cooled by water or cooling fluid that enters through the cooing valve 16. The cooling system is perfectly pressurized, even during the movement of the hemispherical piston 17, by seal 9 made of rubber or of any similar elastomer.

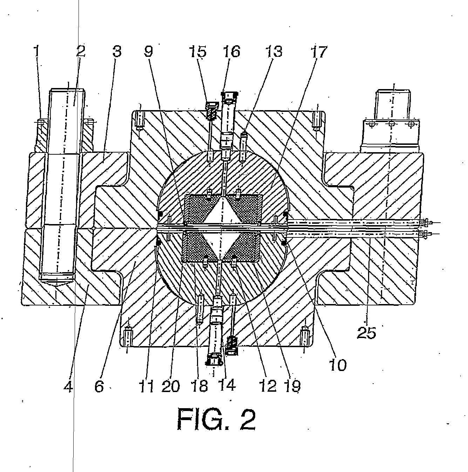

Figure 2 shows the arrangement of a two piston machine, having a particularity that distinguishes it from the one piston machine, and that is that the electrical current supply must be provided through horizontal electrodes 25 in order to prevent the electrical current to enter through the area of high pressures generated in the semi-spherical chamber, and is instead done through the space between the lower hemispherical piston and the upper semi-spherical piston. Such arrangement allows duplicating the force generated by the machine object of the present invention in a simple manner, without appreciable modification of the volume and mass of the machine, and particularly indicated when wanting to attain very high pressures in very large reaction chambers.
The materials most suited to build these machines are high resistance steels: for the covers and the chamber F-125, F-127 or similar, with the appropriate thermal treatment; for the ties and the nuts, treated F-127 steel or similar, for the semi-rings F-125 or similar, for the semi-spherical pistons F-127, Maragin steel or other high resistance alloyed steels. For the cylindrical sectors F-5318, hardened DIN 1.2379 or similar, and for the anvils wolframium carbide containing between 6% and 10% of ligand (Co) are used.

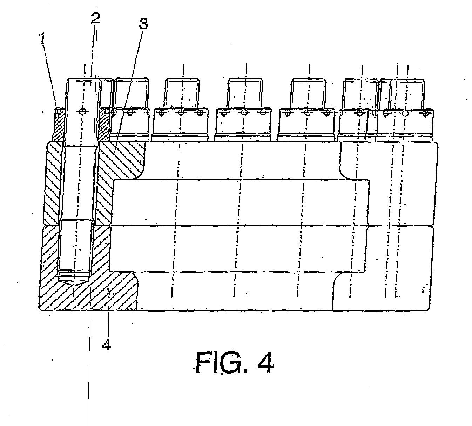

Figure 4 shows an overview of one of the semi-locks that resist the thrust of the semi-spherical pistons.

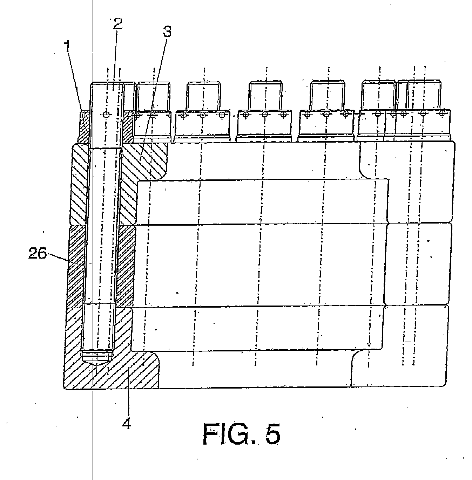

Figure 5 shows an example in which an intermediate semi-ring 26 has been introduced, lending height to the lock. This device serves to confine high pressure machines to which intermediate parts have been incorporated, such as for instance multiple reaction chambers of great height if needed.

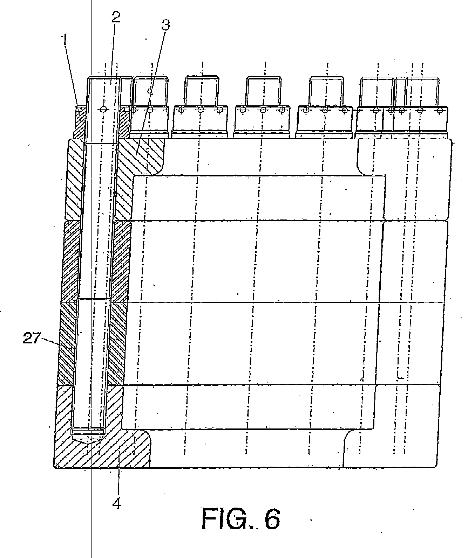

This same model can be repeated in Figure 6, where another supplemental semi-ring 27 is introduced. In this manner, the lock's modular design allows for the incremental increase of the height when required by the machine design without having to excessively increase the cost of said lock, that does not require employing large parts that would have to be custom made in foundries or produced in very restricted batches.

## Claims

1. Multi-anvil cubic machine comprising hemispherical pistons, which is used to generate high pressures and high temperatures, **characterized in that** it has two bodies of, basically, cylindrical symmetry, an upper one called upper cover and a lower one called chamber, that may be one or two chambers housing or two semi-spherical chambers in which one or two semi-spherical pistons are adjusted, that move axially guided by abutments and a small guide that runs on a cylindrical surface of short length, when compared to its diameter, in which this movement represents the travel path of the pistons, that is also very short in relation to its diameter.

2. Multi-anvil cubic machine comprising hemispherical pistons, which is used to generate high pressures and high temperatures, according to Claim 1, that is **characterized in that** the cylindrical piston or pistons are fitted with high pressure seal joints that confine the hydraulic fluid.

3. Multi-anvil cubic machine comprising hemispherical pistons, which is used to generate high pressures and high temperatures, according to the previous claims, that is **characterized in that** the hydraulic pressures necessary for the operation of the machine are realized via high pressure connections through which the high pressure oil enters and reaches the semi-spherical chamber where one or two semi-spherical pistons are housed.

4. Multi-anvil cubic machine comprising hemispherical pistons, which is used to generate high pressures and high temperatures, according to the previous claims, that is **characterized in that** inside the semi-spherical piston or pistons are cylindrical cavities where a series of anvils or cylindrical sectors are housed and centered by abutments that radially abut the rings, both at the semi-spherical piston or pistons and at the upper cover.

5. Multi-anvil cubic machine comprising hemispherical pistons, which is used to generate high pressures and high temperatures, according to the previous claims, that is **characterized in that** the anvils or cylindrical sectors are electrically insulated by means of a seal joint both radially and axially.

6. Multi-anvil cubic machine comprising hemispherical pistons, which is used to generate high pressures and high temperatures, according to Claims 4 and 5, that is **characterized in that** the anvils or cylindrical sectors are designed in such a manner that they house in turn other anvils in a geometrical arrangement that once assembled configures a regular octahedron.

7. Multi-anvil cubic machine comprising hemispherical pistons, which is used to generate high pressures and high temperatures, according to the previous claims, that is **characterized in that** the thrust of the piston or pistons over the anvils or cylindrical sectors is also transmitted to the other anvils that are separated by means of high pressure seal joints that confine the reaction chamber, and the thrust is effected by means of the high pressure oil that pushes the piston or piston, that then exert their action on the anvils or cylindrical sectors that themselves push the other anvils and these the reaction chambers, from three mutually perpendicular directions (cubic) thus attaining an intensification of the pressure inside the reaction chamber due to the geometric relation between forces and components that decompose according to the geometry of the system.

8. Multi-anvil cubic machine comprising hemispherical pistons, which is used to generate high pressures and high temperatures, according to the previous claims, that is **characterized in that** it makes possible attaining reaction chambers of more than 30cc and pressures well above 4 GPa, and even above 10GPa depending on the material used to manufacture the anvils and the contents and size of the reaction chamber.

9. Multi-anvil cubic machine comprising hemispherical pistons, which is used to generate high pressures and high temperatures, according to the previous claims, that is **characterized in that** the reaction chamber is heated, when needed, by an electrical resistance that conducts the electrical current through the electrodes that are in turn in contact with the upper cylindrical sectors that transmit the electrical current to the reaction chamber through the anvils, all sides of which are duly insulated except for the face in contact with the reaction chamber and the corresponding cylindrical sectors.

10. Multi-anvil cubic machine comprising hemispherical pistons, which is used to generate high pressures and high temperatures, according to the previous claims, that is **characterized in that** the entire system is cooled by water or cooling fluid that enters the system through the cooling valve. The cooling circuit is perfectly pressurized, even during the movement of the semi-spherical piston or pistons, by the seal joint made or rubber or a similar elastomer.

11. Multi-anvil cubic machine comprising hemispherical pistons, which is used to generate high pressures and high temperatures, according to the previous claims, that is **characterized in that** the arrangement of a two piston machine has particularity that differentiates it from that of the one piston machine, and that is that the electrical current supply must be provided by means of horizontal electrodes so the electrical current is not introduced through the area of high pressures that are generated in the semi-spherical chamber, but through the space between the lower semi-spherical piston and the upper semi-spherical piston. Such an arrangement allows duplicating the force generated by the machine object of the present invention in a simple manner and without appreciably modifying the volume and mass of the machine, being specially indicated for producing very high pressures inside very large reaction chambers.

12. Multi-anvil cubic machine comprising hemispherical pistons, which is used to generate high pressures and high temperatures, according to the previous Claims, that is **characterized in that** the most appropriate materials to manufacture said machine are high resistance steels, particularly wolframium carbide Cₒ) with a ligand content between 6% and 10% for the anvils.

13. Multi-anvil cubic machine comprising hemispherical pistons, which is used to generate high pressures and high temperatures, according to the previous Claims, that is **characterized in that** the two bodies that make up the machine having basically a cylindrical symmetry, on upper body called upper cover and one lower body called chamber, are confined by two semi-locks composed by two semi-rings, upper and lower. Said semi-rings are joined by ties threaded to the lower semi-ring and tightened by nuts, with the possibility of introducing an intermediate semi-ring to increase the height of the semi-lock to confine the high pressure machines in which additional intermediate pieces have been included, such as in multiple reaction chambers or very tall reaction chambers, if needed, another supplementary semi-ring can be introduced to continue increasing the height, and in this manner the modular design of the lock allows increasing incrementally the height of the machine, if needed.
